(19) Europäisches Patentamt
European Patent Office
Office européen des brevets

(11) **EP 3 293 319 A1**

(12) **EUROPÄISCHE PATENTANMELDUNG**

(43) Veröffentlichungstag:
**14.03.2018 Patentblatt 2018/11**

(21) Anmeldenummer: **17202076.0**

(22) Anmeldetag: **16.11.2017**

(51) Int Cl.:
*E04B 1/41* (2006.01)   *F16B 7/10* (2006.01)
*F16B 19/02* (2006.01)   *G01B 3/20* (2006.01)
*E04B 1/38* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder: **Bragagna, Elio**
**6822 Duens (AT)**

(74) Vertreter: **Hilti Aktiengesellschaft**
**Corporate Intellectual Property**
**Feldkircherstrasse 100**
**Postfach 333**
**9494 Schaan (LI)**

(54) **BEFESTIGUNGSSET MIT NONIUSSYSTEM UND MONTAGEVERFAHREN**

(57)    Die Erfindung betrifft ein Befestigungsset mit einem ersten Grundkörper (4) und einem Verbinder (2) zum Befestigen am ersten Grundkörper (4), wobei der erste Grundkörper (4) eine erste Grundkörperlochreihe (41, 51) aufweist, und wobei der Verbinder (2) eine erste Verbinderlochreihe (21, 31) aufweist, die mit der ersten Grundkörperlochreihe (41) ein Noniussystem bildet. Erfindungsgemäss ist vorgesehen, dass der Verbinder (2) ein erstes Langloch (32) aufweist, das parallel zur ersten Verbinderlochreihe (21) verläuft, und dass der erste Grundkörper (4) zumindest ein Gegenloch (52'') für eine Überlagerung mit dem ersten Langloch (32) bei gleichzeitiger paralleler Überlagerung der ersten Verbinderlochreihe (21) mit der ersten Grundkörperlochreihe (41) aufweist. Die Erfindung betrifft ferner ein Verfahren zur Montage eines solchen Befestigungssets und den Verbinder (2) eines solchen Befestigungssets.

Fig. 3

**Beschreibung**

Die Erfindung betrifft ein Befestigungsset gemäss dem Oberbegriff des Anspruchs 1. Ein solches Befestigungsset ist ausgebildet mit einem ersten Grundkörper und einem Verbinder zum Befestigen am ersten Grundkörper, wobei der erste Grundkörper eine erste Grundkörperlochreihe aufweist, und wobei der Verbinder eine erste Verbinderlochreihe aufweist, die mit der ersten Grundkörperlochreihe ein Noniussystem bildet. Die Erfindung betrifft ferner ein Verfahren zur Montage eines solchen Befestigungssets und einen Verbinder eines solchen Befestigungssets.

Aus der DE 3049346 A1 ist eine verstellbare Tragkonstruktion für Unterdecken bekannt, bei welcher die Löcher einer Lochreihe kleinere Abstände als die einer gegenüberliegenden anderen Lochreihe aufweisen und ein Noniussystem gebildet wird, so dass bei kleinstufigen Verschiebungen der ersten Lochreihe gegenüber der anderen Lochreihe immer ein anderes Loch der ersten Lochreihe in Deckung mit einem Loch der anderen Lochreihe kommen kann.

Aus der US 3495796 A ist eine weitere verstellbare Konstruktion bekannt, bei der zur kleinstufigen Höhenverstellbarkeit zwei korrespondierende Lochreihen vorgesehen sind, die entsprechend dem Nonius-Prinzip konfiguriert sind.

Die US 20050286968 A1 zeigt Teleskopprofile mit Nonius-Lochbildern, mit denen sich kleinstufige Teleskopwege erzielen lassen.

Die US 3003600 A zeigt L-förmige Montageschienen, die unmittelbar miteinander verbunden werden. Die Montageschienen weisen sowohl Langlöcher als auch Rundlöcher auf.

Die US 2012217352 A1 zeigt Montageschienen mit dreieckigem Querschnitt.

Die US 8651786 B2 zeigt einen Verbinder mit einem T-Stück, welches eine C-Profilschiene hintergreift.

Die US 8387324 B2 zeigt eine Unterstruktur für eine Fassade. Ein erstes Element der Unterstruktur weist eine Lochreihe und ein zur Lochreihe paralleles Langloch auf, und ein zweites Element der Unterstruktur weist Einzellöcher auf, die mit den Löchern des ersten Elements korrespondieren können. Bei der Montage wird erst das Langloch des ersten Elements verwendet, und anschliessend die Lochreihe des ersten Elements.

Aufgabe der Erfindung ist es, ein Befestigungsset sowie ein Verfahren zu dessen Montage und einen entsprechenden Verbinder anzugeben, welche bei geringem Aufwand eine besonders einfache und zuverlässige Handhabung erlauben, und insbesondere eine besonders einfache Montage, vorzugsweise auch komplexerer Anordnungen, erlauben.

Die Aufgabe wird erfindungsgemäss durch ein Befestigungsset mit den Merkmalen des Anspruchs 1, ein Verfahren mit den Merkmalen des Anspruchs 14 und ein Befestigungsset mit den Merkmalen des Anspruchs 16 gelöst. Bevorzugte Ausführungsformen sind in den jeweils abhängigen Ansprüchen angegeben.

Ein erfindungsgemässes Befestigungsset ist dadurch gekennzeichnet, dass der Verbinder ein erstes Langloch aufweist, das parallel zur ersten Verbinderlochreihe verläuft, und dass der erste Grundkörper zumindest ein Gegenloch für eine Überlagerung mit dem ersten Langloch, insbesondere für eine erste Stiftverbindung, bei gleichzeitiger paralleler Überlagerung der ersten Verbinderlochreihe mit der ersten Grundkörperlochreihe, insbesondere für eine zweite Stiftverbindung, aufweist.

Die Erfindung hat erkannt, dass Nonius-Befestigungssets mit noniusartig konfigurierten Lochreihen in bestimmten Anwendungsfällen vergleichsweise aufwändig in der Montage sein können, und zwar insbesondere dann, wenn das Nonius-Befestigungsset als Teil einer komplexeren Anordnung verwendet werden soll, beispielsweise als Teil einer komplexen Montageschienen-Anordnung. Insbesondere wurde im Rahmen der Erfindung beobachtet, dass bei einer Anwendung eines Nonius-Befestigungssets als Teil einer komplexeren Anordnung aufwändige, teilweise händische Abstützungsmassnahmen erforderlich sein können, die unter Umständen eine Vielzahl von Monteuren, welche die Bauteile halten, erfordern, und den Montagevorgang entsprechend aufwändig machen. Die Erfindung hat weiter erkannt, dass dies auf eine Eigenschaft zurückzuführen ist, die an anderer Stelle eigentlich vorteilhaft ist, und die den Einsatz des Noniusprinzips gerade begründet. So kombiniert ein das Nonius-prinzip anwendendes Befestigungsset nämlich eine fein abgestufte und somit nahezu stufenlose Positionseinstellung mit einer besonders guten Kraftübertragung, so dass ein besonders robustes Befestigungsset erhalten werden kann. Die gute Kraftübertragung ist dabei darauf zurückzuführen, dass das Noniussystem eben doch nicht völlig stufenlos ist, sondern auf diskreten Lochreihen basiert, was eine besonders effektive Kraftübertragung an der Lochleibung ermöglicht. Es wurde nun erkannt, dass genau dies auch der Grund für den erhöhten Montageaufwand sein kann. Denn dieser diskrete, das heisst nicht-kontinuierliche Charakter des Noniussystems kann eine Nachjustierung der Position aufwändig machen: So muss für eine Nachjustierung des Nonius-Befestigungssets erst der zumindest eine Stift, der die beiden Lochreihen verbindet, entnommen werden, und erst dann kann das Befestigungsset gegeneinander verschoben werden, woraufhin der Stift wieder eingeführt werden muss. Gerade bei der Montage von komplexen Anordnungen kann eine Nachjustierung aber häufig erforderlich sein, denn bei solchen komplexen Anordnungen stehen die Positionen der einzelnen Bestandteile zueinander zu Beginn des Montagevorgangs häufig nur näherungsweise fest, da die exakten Endpositionen von vorher nur schwer zu bestimmenden Dimensionsabweichungen der komplexen Anordnung und/oder Randbedingungen abhängen. Da eine Nachjustierung somit zwar häufig erforderlich ist, aber nur mit vergleichsweise hohem Aufwand durchführbar ist, können sich die Monteure damit behelfen, dass sie die Nonius-Befestigungssets erst nach vollständiger Montage der komplexen Anordnung fixieren. Dies macht aber wieder die oben erwähnten aufwändigen Abstützungsmassnahmen mit entsprechendem Ressourceneinsatz erforderlich - bildlich gesprochen ist bei der Montage gleichzeitig eine Vielzahl von Händen für eine temporäre Abstützung notwendig.

An diesen überraschenden Erkenntnissen setzt die Erfindung an und sieht zusätzlich zu den beiden noniusartig korrespondierenden ersten Lochreihen ein erstes Langloch mit zumindest einem korrespondierenden Gegenloch vor, wobei das erste Langloch und das Gegenloch zum parallel überlagerten Führen der beiden noniusartig korrespondierenden ersten Lochreihen eingerichtet sind. Auf den ersten Blick mögen diese zusätzlichen Löcher redundant erscheinen, da doch die nahezu stufenlose Höhenverstellung schon durch die noniusartig korrespondierenden ersten Lochreihen realisiert werden kann, und dies regelmässig mit besserer Kraftübertragung. Ihre besonderen Vorteile können die zusätzlichen Löcher aber insbesondere bei der Montage komplexerer Anordnungen zeigen. Hier können die zusätzlichen Löcher nämlich eine Vormontagekonfiguration zur Verfügung stellen, in welcher der Verbinder zwar schon am Grundkörper fixiert ist, dies aber in einer so losen Art und Weise, dass der Verbinder noch längs der ersten Lochreihen, welche das Noniussystem bilden, am Grundkörper verschiebbar ist. Und hierdurch wiederum kann eine Nachjustierung ermöglicht werden, ohne dass das zuvor beschriebene aufwändige Abstützen oder das zuvor beschriebene aufwändige Umstecken des Stifts in den korrespondierenden ersten Lochreihen erforderlich wäre - denn der Stift der korrespondierenden ersten Lochreihen muss erst am Ende des Montagevorgangs eingesetzt werden und vorher können Verbinder und Grundkörper über das erste Langloch und das zumindest eine Gegenloch zusammengehalten werden. Bildlich gesprochen können das erste Langloch und das zumindest eine Gegenloch somit eine "helfende Hand" zur Verfügung stellen, die den Verbinder so lange, und zwar justierbar, am Grundkörper hält, bis die endgültige Positionsfixierung mittels der korrespondierenden ersten Lochreihen erfolgen kann. Der Montageaufwand kann damit deutlich reduziert werden. Nach Abschluss des Montagevorgangs kann der im Langloch und zumindest einem Gegenloch angeordnete Stift entnommen werden oder auch dort verbleiben, was das Befestigungsset in besonders einfacher und vorteilhafter Weise noch zusätzlich aussteifen kann.

Unter paralleler Überlagerung der ersten Verbinderlochreihe mit der ersten Grundkörperlochreihe kann insbesondere eine Überlagerung, also eine Anordnung für fluchtende oder potenziell fluchtende Löcher, in einem Zustand verstanden werden, in dem die Längsachse der ersten Verbinderlochreihe parallel zur Längsachse der ersten Grundkörperlochreihe verläuft.

Die erste Verbinderlochreihe ist insbesondere für eine Stiftverbindung mit der ersten Grundkörperlochreihe vorgesehen. Unter einer Stiftverbindung kann in fachüblicher Weise insbesondere eine Verbindung verstanden werden, bei der ein Stift durch zwei miteinander fluchtende Löcher gesteckt wird. Vorzugsweise weisen alle Löcher der ersten Verbinderlochreihe denselben Durchmesser auf und/oder weisen alle Löcher der ersten Grundkörperlochreihe denselben Durchmesser auf. Besonders zweckmässig ist es, dass die erste Verbinderlochreihe für eine spielfreie Stiftverbindung mit der ersten Grundkörperlochreihe vorgesehen ist. Vorzugsweise können hierfür die Löcher der ersten Verbinderlochreihe denselben Durchmesser aufweisen wie die Löcher der ersten Grundkörperlochreihe. Die Löcher der ersten Verbinderlochreihe und/oder die Löcher der ersten Grundkörperlochreihe sind vorzugsweise Rundlöcher. Zweckmässigerweise sind die erste Verbinderlochreihe und/oder die erste Grundkörperlochreihe jeweils einreihig ausgebildet. Insbesondere weisen die Löcher der ersten Verbinderlochreihe einen konstanten Lochabstand $d_{21}$ auf und/oder die Löcher der ersten Grundkörperlochreihe einen konstanten Lochabstand $d_{41}$ auf.

Die Verbinderlochreihe bildet mit der ersten Grundkörperlochreihe ein Noniussystem, was insbesondere beinhalten soll, dass sich der Lochabstand der ersten Verbinderlochreihe $d_{21}$ vom Lochabstand der ersten Grundkörperlochreihe $d_{41}$ noniusartig unterscheidet, das heisst dass die beiden Lochabstände $d_{21}$ und $d_{41}$ in einem gebrochen-rationalen Verhältnis zueinander stehen, und insbesondere

$$d_{21} / d_{41} = (n - 1) / n$$

oder

$$d_{41} / d_{21} = (n - 1) / n$$

ist, wobei n eine natürliche Zahl ist.

Besonders bevorzugt ist es, dass der Lochabstand $d_{21}$ der ersten Verbinderlochreihe kleiner ist als der Lochabstand $d_{41}$ der ersten Grundkörperlochreihe. Hierdurch kann ein besonders kompakter Verbinder erhalten werden und insbesondere in dem Fall, in dem der Grundkörper eine Montageschiene ist, kann der Materialeinsatz besonders gering sein. Vorzugsweise gilt demgemäss $d_{21} / d_{41} = (n - 1) / n$. Die Verbinderlochreihe weist dabei zweckmässigerweise zumindest n Löcher auf, um sämtliche Zwischenstellungen des Noniussystems realisieren zu können. Vorzugsweise weist sie genau n Löcher auf. Damit kann der Verbinder ohne Einbussen am Verstellweg besonders kompakt gestaltet werden. Vorzugsweise kann n = 5 sein, was eine besonders kompakte und zugleich robuste Konfiguration erlaubt.

Das erste Langloch verläuft parallel zur ersten Verbinderlochreihe, was insbesondere beinhalten kann, dass die langen Seiten des ersten Langlochs und/oder die Längsachse des ersten Langlochs parallel zur Längsachse der ersten Verbinderlochreihe verläuft, also insbesondere parallel zu derjenigen Achse, auf der die Löcher der ersten Verbinderlochreihe liegen.

Der erste Grundkörper weist zumindest ein Gegenloch für eine Überlagerung mit dem ersten Langloch bei gleichzeitiger paralleler Überlagerung der ersten Verbinderlochreihe mit der ersten Grundkörperlochreihe auf, was insbesondere beinhalten kann, dass das zumindest eine Gegenloch das erste Langloch für eine erste Stiftverbindung - zwischen dem ersten Langloch und dem zumindest einen Gegenloch - überlagern kann, wenn die erste Verbinderlochreihe die erste Grundkörperlochreihe für eine zweite Stiftverbindung - zwischen der ersten Verbinderlochreihe und der ersten Grundkörperlochreihe - parallel überlagert.

Das zumindest eine Gegenloch ist vorzugsweise ein Rundloch. Insbesondere können der Verbinder und/oder der Grundkörper jeweils aus einem Metallmaterial bestehen.

Besonders bevorzugt ist es, dass das erste Langloch parallel und versetzt zur ersten Verbinderlochreihe verläuft. Demgemäss ist also das erste Langloch seitlich versetzt zur erste Verbinderlochreihe angeordnet. Hierdurch ist eine besonders kompakte Bauweise möglich. Insbesondere hat das zumindest eine Gegenloch von der ersten Grundkörperlochreihe denselben Abstand wie das erste Langloch von der ersten Verbinderlochreihe. Hierdurch wird eine doppelte Überlagerung möglich.

Zweckmässigerweise weist der erste Grundkörper mehrere Gegenlöcher für eine Überlagerung mit dem ersten Langloch bei gleichzeitiger paralleler Überlagerung der ersten Verbinderlochreihe mit der ersten Grundkörperlochreihe auf, wobei die Gegenlöcher eine zweite Grundkörperlochreihe bilden. Hierdurch ist eine besonders weitreichende Verstellung der Position des Verbinders am Grundkörper möglich. Insbesondere kann diese Ausgestaltung beinhalten, dass das erste Langloch die zweite Grundkörperlochreihe, für eine erste Stiftverbindung - zwischen dem ersten Langloch und der zweiten Grundkörperlochreihe - überlagern kann, wenn die erste Verbinderlochreihe die erste Grundkörperlochreihe für eine zweite Stiftverbindung - zwischen der ersten Verbinderlochreihe und der ersten Grundkörperlochreihe - parallel überlagert. Die zweite Grundkörperlochreihe ist im Grundkörper vorgesehen. Insbesondere ist die zweite Grundkörperlochreihe parallel und versetzt zur ersten Grundkörperlochreihe angeordnet. Vorzugsweise weist die zweite Grundkörperlochreihe einen konstanten Lochabstand $d_{42}$ auf. Die Gegenlöcher der zweiten Grundkörperlochreihe können insbesondere Rundlöcher sein. Besonders bevorzugt ist es, dass der Lochabstand der zweiten Grundkörperlochreihe gleich dem Lochabstand der ersten Grundkörperlochreihe ist, also $d_{42} = d_{41}$. Vorzugsweise sind die Gegenlöcher der zweiten Grundkörperlochreihe auf derselben Höhe angeordnet wie die Löcher der ersten Grundkörperlochreihe.

Insbesondere ist gleichzeitig eine zweite Stiftverbindung zwischen der ersten Verbinderlochreihe und der ersten Grundkörperlochreihe und eine erste Stiftverbindung zwischen dem ersten Langloch und der zweiten Grundkörperlochreihe möglich, wenn die erste Verbinderlochreihe, die erste Grundkörperlochreihe, das erste Langloch und die zweite Grundkörperlochreihe alle parallel zueinander verlaufen.

Insbesondere für ein noch breiteres Anwendungsspektrum kann es vorteilhaft sein, dass der Verbinder ein, vorzugsweise als Rundloch ausgebildetes, Stützloch aufweist, das ein Gegenloch der zweiten Grundkörperlochreihe, insbesondere für eine erste Stütz-Stiftverbindung überlagern kann, wenn ein Loch der ersten Verbinderlochreihe ein Loch der ersten Grundkörperlochreihe, insbesondere für eine zweite Stütz-Stiftverbindung überlagert, und wenn das erste Langloch, vorzugsweise an einem Ende des ersten Langlochs, ein weiteres Gegenloch der zweiten Grundkörperlochreihe, insbesondere für eine Montage-Stiftverbindung, überlagert. Demgemäss ist also zugleich eine zweite Stütz-Stiftverbindung zwischen der ersten Verbinderlochreihe und der ersten Grundkörperlochreihe und eine erste Stütz-Stiftverbindung zwischen dem Stützloch und der zweiten Grundkörperlochreihe möglich, wodurch eine besonders biegefeste Verbindung möglich ist. Insbesondere kann die doppelte Stütz-Stiftverbindung dann möglich sein, wenn am Ende des Langlochs die Montage-Stiftverbindung zur zweiten Grundkörperlochreihe hergestellt ist. Demgemäss kann das erste Langloch zum besonders einfachen Auffinden der korrekten Positionierung für die doppelte Stütz-Stiftverbindung dienen. Zweckmässigerweise ist das Stützloch in der Verlängerung des Langlochs, also insbesondere auf der Längsachse des Langlochs, angeordnet. Vorzugsweise liegt der Mittelpunkt des Stützlochs auf der Längsachse des Langlochs.

Besonders vorteilhaft ist es, dass das erste Langloch zumindest bereichsweise, besonders bevorzugt vollständig, auf gleicher Höhe wie die erste Verbinderlochreihe liegt, wobei "auf gleicher Höhe" insbesondere auf die Längsachse der ersten Verbinderlochreihe bezogen sein soll. Demgemäss liegt also das erste Langloch zumindest bereichsweise, vorzugsweise vollständig, in einem fiktiven Teilraum, der sämtliche durch die erste Verbinderlochreihe senkrecht zur Längsachse der ersten Verbinderlochreihe verlaufende Ebenen enthält, und/oder das erste Langloch liegt zumindest bereichsweise, vorzugsweise vollständig, querab der ersten Verbinderlochreihe. Hierdurch kann eine besonders kompakte Konstruktion erhalten werden und unerwünschten Hebeleffekten kann in besonders einfacher Weise entgegengewirkt werden. Vorzugsweise ist die erste Verbinderlochreihe länger als das erste Langloch. Insbesondere kann die erste Verbinderlochreihe auf gegenüberliegenden Seiten über das Langloch überstehen, was eine besonders kompakte Anordnung ermöglicht.

Eine weitere zweckmässige Weiterbildung der Erfindung liegt darin, dass die Länge $l_{32}$ des ersten Langlochs mindestens so gross ist wie der Lochabstand $d_{21}$ der ersten Verbinderlochreihe, also $l_{32} >= d_{21}$. Insbesondere wenn der Lochabstand $d_{21}$ der ersten Verbinderlochreihe kleiner ist als der Lochabstand $d_{41}$ der ersten Grundkörperlochreihe, vorzugsweise also $d_{21} / d_{41} = (n - 1) / n$ gilt, kann dementsprechend eine Stiftverbindung zwischen dem ersten Langloch und einem Gegenloch bestehen bleiben, während das von der ersten Verbinderlochreihe und der ersten Grundkörperlochreihe gebildete Noniussystem sämtliche durch das Noniussystem bereitgestellte Zwischenpositionen durchläuft. Dies kann die Montage weiter vereinfachen. Grundlage hierfür ist die Erkenntnis, dass ein Durchlaufen aller Zwischenpositionen dann möglich ist, wenn:

$$l_{32} >= (\text{Anzahl der Löcher der ersten Verbinderlochreihe} - 1) * (d_{41} - d_{21}), \text{ also insbesondere } l_{32} >= (n - 1) * (d_{41} - d_{21}).$$

In fachüblicher Weise kann die Länge $l_{32}$ des ersten Langlochs insbesondere zwischen den Rundungsmittelpunkten des ersten Langlochs gemessen werden. Zweckmässigerweise kann die Länge $l_{32}$ des ersten Langlochs genau so gross wie der Lochabstand $d_{21}$ der ersten Verbinderlochreihe sein, also $l_{32} = d_{21}$. Das erste Langloch hat also gerade eben die notwendige Länge, wodurch ein besonders robuster Verbinder erhalten werden kann. Allgemein gilt vorzugsweise $l_{32} >= \min(d_{21} , d_{41})$, insbesondere $l_{32} = \min(d_{21} , d_{41})$, wobei "min" in fachüblicher Weise den kleineren der beiden Lochabstände bezeichnet.

Besonders bevorzugt ist es, dass das erste Langloch und die Löcher der ersten Verbinderlochreihe den Verbinder in derselben Richtung durchbrechen, und dass das zumindest eine Gegenloch und die Löcher der ersten Grundkörperlochreihe den Grundkörper in derselben Richtung durchbrechen. Insbesondere verlaufen also die Bohrachsen der jeweils benachbarten Lochanordnungen parallel zueinander. Demgemäss können Stifte, welche das erste Langloch und die zweite Grundkörperlochreihe einerseits und die erste Verbinderlochreihe und die erste Grundkörperlochreihe andererseits passgenau verbinden, parallel zueinander verlaufen, was die Montage und/oder Demontage dieser Stifte noch weiter vereinfachen kann. Bei einer konstruktiv besonders einfachen Lösung kann der Verbinder eine ebene Anlagefläche für den Grundkörper aufweisen, wobei dann sowohl das erste Langloch als auch die Löcher der ersten Verbinderlochreihe in die ebene Anlagefläche einmünden können. Es kann aber beispielsweise auch vorgesehen werden, dass der Verbinder zwischen dem ersten Langloch und der ersten Verbinderlochreihe eine Kante oder einen Radius aufweist, und dass der Grundkörper eine entsprechende Kante beziehungsweise einen entsprechenden Radius zwischen der ersten Grundkörperlochreihe und der zweiten Grundkörperlochreihe aufweist. Die beiden Stifte verlaufen dann nicht mehr parallel, es kann aber beispielsweise die Steifigkeit erhöht sein.

Eine weitere bevorzugte Ausgestaltung der Erfindung liegt darin, dass der Verbinder einen Anschlag für den ersten Grundkörper aufweist, der ein Drehsicherung, insbesondere für den Verbinder am ersten Grundkörper, bildet, wenn das zumindest eine Gegenloch das erste Langloch, insbesondere für die erste Stiftverbindung, überlagert und die erste Verbinderlochreihe die erste Grundkörperlochreihe, insbesondere für die zweite Stiftverbindung, parallel überlagert. Ein solcher Anschlag kann einerseits ein unerwünschtes Verdrehen des vormontierten oder montierten Verbinders verhindern und andererseits eine Positionierungshilfe für den Verbinder am ersten Grundkörper bilden, und somit die Handhabung noch weiter verbessern. Zweckmässigerweise verläuft der Anschlag parallel zur Längsachse der ersten Verbinderlochreihe und/oder parallel zur Längsachse des ersten Langlochs. Insbesondere kann der Anschlag seitlich am Verbinder angeordnet sein, was die Herstellung vereinfachen kann.

Besonders zweckmässig ist es, dass die erste Verbinderlochreihe und/oder das erste Langloch in einer Basisplatte ausgebildet sind. Diese Basisplatte ist Teil des Verbinders. Insbesondere kann die ebene Anlagefläche für den Grundkörper an der Basisplatte angeordnet sein.

Der Anschlag kann zweckmässigerweise durch ein integral mit der Basisplatte ausgebildetes Element gebildet sein, was den Herstellungsaufwand weiter reduzieren und kann. Insbesondere kann vorgesehen werden, dass der Anschlag durch eine Abwinklung der Basisplatte gebildet ist. Eine solche Ausgestaltung kann herstellungstechnisch vorteilhaft sein und/oder die Biegefestigkeit der Basisplatte in vorteilhafter Weise erhöhen.

Besonders vorteilhaft ist es, dass der Anschlag zumindest bereichsweise, vorzugsweise vollständig, auf gleicher Höhe wie das erste Langloch liegt, wobei "auf gleicher Höhe" insbesondere auf die Längsachse des ersten Langlochs bezogen sein soll. Demgemäss liegt also der Anschlag zumindest bereichsweise, vorzugsweise vollständig, in einem fiktiven Teilraum, der sämtliche durch das erste Langloch senkrecht zur Längsachse des ersten Langlochs verlaufende Ebenen enthält, und/oder der Anschlag liegt zumindest bereichsweise, vorzugsweise vollständig, querab des Langlochs. Hierdurch kann eine besonders kompakte Konstruktion erhalten werden und/oder unerwünschten Hebeleffekten kann in besonders einfacher Weise entgegengewirkt werden. Vorzugsweise ist der Anschlag länger als das Langloch. Der Anschlag kann insbesondere auf gegenüberliegenden Seiten über das Langloch überstehen.

Insbesondere kann vorgesehen, dass das erste Langloch zwischen dem Anschlag und der ersten Verbinderlochreihe liegt. Demgemäss ist der Anschlag also näher am Langloch als an der ersten Verbinderlochreihe positioniert, was ebenfalls vorteilhaft im Hinblick auf die Vermeidung unerwünschter Hebeleffekte sein kann.

Der erste Grundkörper kann insbesondere eine Montageschiene, vorzugsweise eine U-Profilschiene oder eine C-Profilschiene, aber beispielsweise auch eine Hohlprofilschiene sein. Der Verbinder kann beispielsweise zum Verbinden des ersten Grundkörpers mit einem Untergrund, beispielsweise Beton oder Stahl, aber auch zum Verbinden des ersten Grundkörpers mit einem, insbesondere als Montageschiene ausgebildeten, zweiten Grundkörper vorgesehen sein. Wenn der Verbinder zum Verbinden zweier Montageschienen vorgesehen ist, kann er vorzugsweise als ebener Winkel ausgebildet sein. Wenn der Verbinder zum Verbinden des ersten Grundkörpers mit einem Untergrund vorgesehen ist, kann der Verbinder beispielsweise als L-förmige Konsole oder als U-förmige Konsole ausgeführt sein.

Besonders bevorzugt ist es, dass der Verbinder ein weiteres Lochbild zum Verbinden mit dem zweiten Grundkörper aufweist. Beispielsweise können die erste Verbinderlochreihe, das erste Langloch und gegebenenfalls das Stützloch in einem ersten Schenkel des Verbinders angeordnet sein und das weitere Lochbild in einem zweiten Schenkel des Verbinders. Sofern der Verbinder eine Basisplatte aufweist, ist das weitere Lochbild zweckmässigerweise in der Basisplatte angeordnet.

Zusätzlich zu den genannten Löchern kann der Verbinder und/oder der Grundkörper noch zusätzliche Löcher aufweisen, um das Einsatzspektrum noch weiter zu erweitern. Es können aber auch ausschliesslich die gennannten Löcher vorgesehen werden.

Die Erfindung betrifft auch die bestimmungsgemässe Verwendung des Befestigungssets. Insbesondere betrifft die Erfindung somit ein Verfahren zur Montage eines erfindungsgemässen Befestigungssets, bei dem

- mittels eines ersten Stifts eine erste Stiftverbindung zwischen dem zumindest einen Gegenloch und dem ersten Langloch hergestellt wird, und
- zeitlich nach dem Herstellen der ersten Stiftverbindung mittels eines zweiten Stifts eine zweite Stiftverbindung zwischen der ersten Verbinderlochreihe und der ersten Grundkörperlochreihe hergestellt wird.

Die einzelnen Stiftverbindungen können insbesondere Schraubverbindungen sein, wenn die entsprechenden Stifte Schrauben sind. Mittels des ersten Stifts wird die Vormontagekonfiguration hergestellt, in welcher der Verbinder zwar schon am Grundkörper fixiert ist, dies aber in einer so losen Art und Weise, dass der Verbinder noch in Richtung der Lochreihen, welche das Noniussystem bilden, also in Richtung der ersten Verbinderlochreihe und der ersten Grundkörperlochreihe, am Grundkörper versetzt werden kann. Besonders bevorzugt ist es, dass der Verbinder zeitlich nach dem Herstellen der ersten Stiftverbindung und zeitlich vor dem Herstellen der zweiten Stiftverbindung relativ zum Grundkörper versetzt wird, und zwar insbesondere in einem Zustand, in dem sich die erste Verbinderlochreihe und die erste Grundkörperlochreihe parallel überlagern und/oder insbesondere in einem in einem Zustand, in dem die erste Stiftverbindung noch besteht. Insbesondere kann hierbei der Verbinder in Richtung der Lochreihen, welche das Noniussystem bilden, versetzt werden.

Die Erfindung betrifft auch den Verbinder des Befestigungssets für sich genommen.

Merkmale, die im Zusammenhang mit dem erfindungsgemässen Befestigungsset erläutert werden, können auch beim erfindungsgemässen Verfahren zum Einsatz kommen, so wie auch umgekehrt Merkmale, die im Zusammenhang mit dem erfindungsgemässen Verfahren erläutert werden, auch beim erfindungsgemässen Befestigungsset oder dessen Verbinder zum Einsatz kommen können.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figur 1: eine perspektivische Darstellung eines Ausführungsbeispiels eines Verbinders eines erfindungsgemässen Befestigungssets zur Verwendung in einem erfindungsgemässen Verfahren von oben;

Figur 2: eine perspektivische Darstellung des Verbinders aus Figur 1 von unten;

Figuren 3 bis 6: ein Ausführungsbeispiel eines Befestigungssets, bestehend aus dem Verbinder gemäss Figuren 1 und 2 und einem Grundkörper, jeweils in aufeinanderfolgenden Schritten bei der Durchführung eines erfindungsgemässen Verfahrens zur Montage des Befestigungssets; und

Figuren 7 bis 10: aufeinander folgende Schritten bei der Durchführung einer Variante eines Verfahrens zur Montage des Befestigungssets der Figuren 3 bis 6.

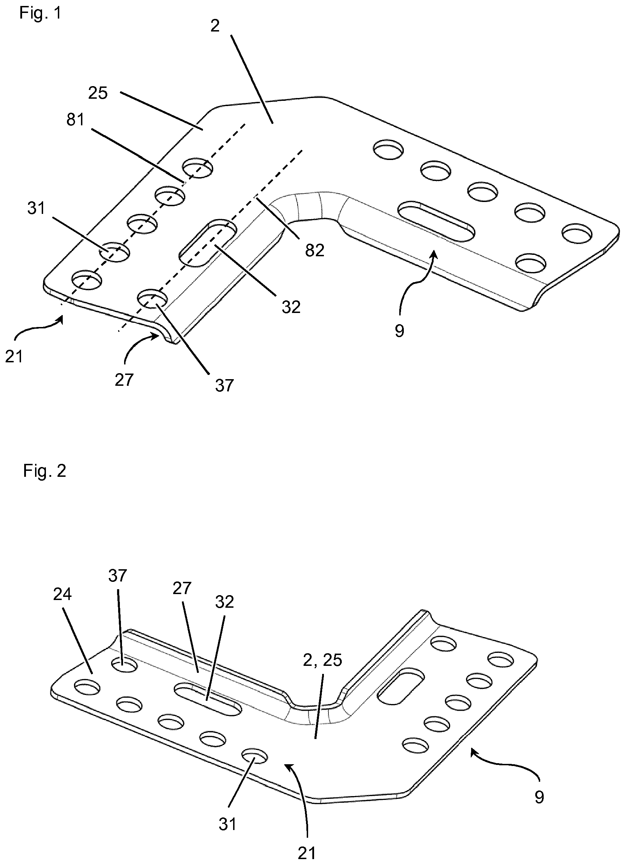

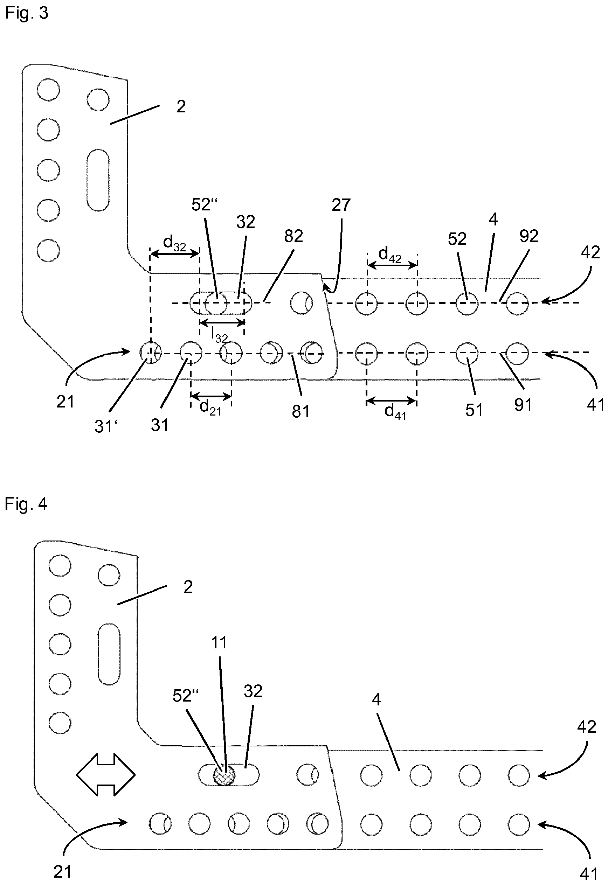

Die Figuren 3 bis 10 zeigen ein erfindungsgemässes Befestigungsset und die Figuren 1 und 2 den Verbinder des Befestigungssets in Detailansicht.

Im Verbinder 2 ist eine erste Verbinderlochreihe 21 mit einer Vielzahl von Löchern 31 ausgebildet, welche als Rundlöcher ausgeführt sind, und welche Durchgangsöffnungen durch den Verbinder 2 bilden. Im dargestellten Ausführungsbeispiel weist die erste Verbinderlochreihe 21 fünf Löcher 31 auf, was aber nur beispielhaft verstanden werden soll. Je nach Anwendung kann eine andere Lochanzahl vorgesehen werden. Die erste Verbinderlochreihe 21 definiert die in den Figuren 1 und 3 gezeigte Längsachse 81. Im dargestellten Ausführungsbeispiel ist die erste Verbinderlochreihe 21 einreihig, das heisst die Längsachse 81 der ersten Verbinderlochreihe 21 verläuft durch die Mittelpunkte der Löcher 31 der ersten Verbinderlochreihe 21.

Darüber hinaus ist im Verbinder 2 ein erstes Langloch 32 ausgebildet, welches eine Durchgangsöffnung durch den Verbinder 2 bildet. Das erste Langloch 32 definiert die in den Figuren 1 und 3 gezeigte Längsachse 81, die mittig im ersten Langloch 32, parallel zu den langen Seiten des ersten Langlochs 32 verläuft. Das erste Langloch 32 verläuft parallel beabstandet zur ersten Verbinderlochreihe 21. Insbesondere verlaufen also die entsprechenden Längsachsen 82 beziehungsweise 81 parallel und mit Abstand zueinander.

In der dargestellten Ausführungsform befindet sich das erste Langloch 32 auf seiner gesamten Länge auf Höhe der ersten Verbinderlochreihe 21, insbesondere in Richtung der Längsachse 81 und/oder der Längsachse 82 betrachtet. Die erste Verbinderlochreihe 21 ist länger als das erste Langloch 32 und steht auf gegenüberliegenden Seiten über das erste Langloch 32 über.

Im dargestellten Ausführungsbeispiel durchbrechen das erste Langloch 32 und die Löcher 31 der ersten Verbinderlochreihe 21 den Verbinder 2 in derselben Richtung, was ein parallel gerichtetes Einführen von passgenauen Stiften in das erste Langloch 32 einerseits und die Löcher 31 der ersten Verbinderlochreihe 21 andererseits ermöglicht.

Vorteilhafterweise weist der Verbinder 2 wie dargestellt eine ebene Anlagefläche 24 für einen weiter unten im Detail beschriebenen ersten Grundkörper 4 auf, in die zumindest das erste Langloch 32 oder die Löcher 31 der ersten Verbinderlochreihe 21, vorzugsweise wie dargestellt sowohl das erste Langloch 32 als auch die Löcher 31 der ersten Verbinderlochreihe 21, einmünden.

Der Verbinder 2 weist ferner einen Anschlag 27 für den ersten Grundkörper 4 auf. Dieser Anschlag 27 steht auf der den Löchern 31 abgewandten Seite der Anlagefläche 24 des Verbinders 2 von der Anlagefläche 24 vor. Der Anschlag 27 dient zum Positionieren des Verbinders 2 am ersten Grundkörper 4 und/oder zum Begrenzen einer Drehung des Verbinders 2 relativ zum ersten Grundkörper 4 um einen den Verbinder 2 und den ersten Grundkörper 4 verbindenden, vorzugsweise im ersten Langloch 32 angeordneten Stift.

Der Anschlag 27 für den ersten Grundkörper 4 verläuft parallel zur Längsachse 81 der ersten Verbinderlochreihe 21 und/oder parallel zur Längsachse 82 des ersten Langlochs 32. Der Anschlag 27 ist länger als das erste Langloch 32 und steht auf gegenüberliegenden Seiten über das erste Langloch 32 über.

Der Anschlag 27 ist hier randseitig am Verbinder 2 angeordnet, insbesondere an demjenigen Rand, an dem das erste Langloch 32 verläuft. Der Anschlag 27 ist näher am ersten Langloch 32 angeordnet als an der ersten Verbinderlochreihe 21, das heisst das erste Langloch 32 befindet sich zwischen dem Anschlag 27 und der ersten Verbinderlochreihe 21. Insbesondere ist der Anschlag 27 wie dargestellt näher an der Längsachse 82 des ersten Langlochs 32 als an der Längsachse 81 der ersten Verbinderlochreihe 21 angeordnet.

Im dargestellten Ausführungsbeispiel weist der Verbinder 2 eine flache Basisplatte 25 auf, die von der ersten Verbinderlochreihe 21 und dem ersten Langloch 32 durchbrochen wird, und der Anschlag 27 ist an einer Abwinklung der Basisplatte 25 angeordnet. Die Abwinklung, welche den Anschlag 27 bildet, kann insbesondere wie dargestellt an demjenigen Rand der Basisplatte 25, an dem das erste Langloch 32 verläuft, gebildet sein.

Die erste Verbinderlochreihe 21, das erste Langloch 32 und ein gegebenenfalls vorhandenes zusätzliches Stützloch 37 bilden ein erstes Lochbild zum Verbinden des Verbinder 2 mit dem ersten Grundkörper 4. Im dargestellten Ausführungsbeispiel ist der Verbinder 2 als flacher Winkel ausgeführt, wobei das erste Lochbild in einem ersten Schenkel des Winkels ausgebildet ist, und wobei der Verbinder 2 im zweiten Schenkel des Winkels noch ein zweites Lochbild 9 aufweist, das zum Befestigen an einem nicht dargestellten zweiten Grundkörper dient. Der Verbinder 2 kann aber auch anders ausgestaltet sein und beispielsweise ein T-Verbinder, einen U-Verbinder oder eine L-Konsole bilden.

Die Figuren 3 bis 10 zeigen ein Befestigungsset enthaltend den zuvor beschriebenen Verbinder 2 sowie einen korrespondierenden Grundkörper 4. Der Grundkörper 4, der vorzugsweise eine Montageschiene ist, ist stangenförmig ausgebildet. Der Grundkörper 4 weist eine erste Grundkörperlochreihe 41 mit einer Vielzahl von Löchern 51 auf, die als Rundlöcher ausgebildet sind, und die den Grundkörper 4 durchbrechen. Die erste Grundkörperlochreihe 41 definiert die in Figur 4 gezeigte Längsachse 91. Im dargestellten Ausführungsbeispiel ist die erste Grundkörperlochreihe 41 einreihig, das heisst ihre Längsachse 91 verläuft durch die Mittelpunkte der Löcher 51 der ersten Grundkörperlochreihe 41.

Der Grundkörper 4 weist ferner zumindest ein Gegenloch 52 auf, das als Rundloch ausgebildet ist, und das den Grundkörper 4 durchbricht. Das zumindest eine Gegenloch 52 ist seitlich versetzt zur ersten Grundkörperlochreihe 41 und deren Längsachse 91 angeordnet. Insbesondere hat das zumindest eine Gegenloch 52 von der ersten Grundkörperlochreihe 41 denselben Abstand wie das erste Langloch 32 von der ersten Verbinderlochreihe 21, so dass das zumindest eine Gegenloch 52 das erste Langloch 32 überlagern kann, wenn die erste Verbinderlochreihe 21 die erste Grundkörperlochreihe 41 parallel überlagert. Vorzugsweise weist der Grundkörper 4 wie dargestellt eine Vielzahl von Gegenlöchern 52 auf, die als Rundlöcher ausgebildet sind, und die den Grundkörper 4 durchbrechen. Diese Gegenlöcher 52 bilden eine zweite Grundkörperlochreihe 42. Die zweite Grundkörperlochreihe 42 definiert die in Figur 4 gezeigte Längsachse 92. Im dargestellten Ausführungsbeispiel ist die zweite Grundkörperlochreihe 42 einreihig, das heisst ihre Längsachse 92 verläuft durch die Mittelpunkte ihrer Gegenlöcher 52. Insbesondere hat die zweite Grundkörperlochreihe 42 von der ersten Grundkörperlochreihe 41 denselben Abstand wie das erste Langloch 32 von der ersten Verbinderlochreihe 21, so dass die zweite Grundkörperlochreihe 42 das erste Langloch 32 parallel überlagern kann, wenn die erste Verbinderlochreihe 21 die erste Grundkörperlochreihe 41 parallel überlagert.

Die Löcher 31 der ersten Verbinderlochreihe 21 sind, mit einem Lochabstand $d_{21}$, äquidistant angeordnet. Die Löcher 51 der ersten Grundkörperlochreihe 41 sind, mit einem Lochabstand $d_{41}$, äquidistant angeordnet. Vorzugsweise sind wie dargestellt auch die Gegenlöcher 52 der zweiten Grundkörperlochreihe 42, mit einem Lochabstand $d_{42}$, äquidistant angeordnet. Der Lochabstand $d_{41}$ der Löcher 51 der ersten Grundkörperlochreihe 41 ist hier gleich dem Lochabstand $d_{42}$ der Gegenlöcher 52 der zweiten Grundkörperlochreihe 42. Die einzelnen Löcher 51 der ersten Grundkörperlochreihe 41 sind hierbei auf derselben Höhe wir die Gegenlöcher 52 der zweiten Grundkörperlochreihe 42 angeordnet, insbesondere bezogen auf die beiden Längsachsen 91 und 92. Grundsätzlich ist aber auch eine versetzte Anordnung der benachbarten Lochreihen 41 und 42 oder eine Anordnung denkbar, bei der sich die Lochabstände $d_{41}$ und $d_{42}$ unterschieden.

Die erste Verbinderlochreihe 21 und die erste Grundkörperlochreihe 41 bilden ein Noniussystem, das heisst der Lochabstand $d_{21}$ der ersten Verbinderlochreihe 21 unterscheidet sich vom Lochabstand $d_{41}$ der ersten Grundkörperlochreihe 41 nach Art eines Nonius. Insbesondere ist also einer dieser beiden Lochabstände $d_{41}$ oder $d_{21}$ ein konstanter Bruchteil des jeweils anderen der beiden Lochabstände $d_{21}$ beziehungsweise $d_{41}$, insbesondere ein Bruchteil der Menge (n - 1) / n. Vorzugsweise ist der Lochabstand $d_{21}$ der ersten Verbinderlochreihe 21 kleiner als der Lochabstand $d_{41}$ der ersten Grundkörperlochreihe 41. Vorzugsweise haben die Löcher 31 der ersten Verbinderlochreihe 21 wie dargestellt denselben Lochdurchmesser wie die Löcher 51 der ersten Grundkörperlochreihe 41. Damit kann ein zylindrischer Stift passgenau durch beide Lochreihen 21 und 51 durchgeführt werden.

Im vorliegenden Ausführungsbeispiel beträgt der Lochabstand $d_{21}$ der ersten Verbinderlochreihe 21 20 mm und der Lochabstand $d_{41}$ der ersten Grundkörperlochreihe 41 25 mm, wobei die Lochabstände jeweils von der Lochmitte aus in Längsrichtung gemessen werden. Die Lochabstände $d_{21}$ und $d_{41}$ stehen also im festen Verhältnis 4:5, das heisst n = 5. Damit kann es alle $|d_{21} - d_{41}| = 5$ mm zu einer Lochüberlagerung zwischen Verbinderlochreihe 21 und erster Grundkörperlochreihe 41 kommen, das heisst das zwischen Verbinderlochreihe 21 und erster Grundkörperlochreihe 41 gebildete Noniussystem erlaubt eine Fixierung des Verbinders 2 am Grundkörper 4 in 5 mm-Schritten. Die erste Verbinderlochreihe 21 weist insgesamt 5 Löcher 31 auf, und die erste Grundkörperlochreihe 41 mehr als 4 Löcher. Für die Anzahl $n_{21}$ der Löcher der ersten Verbinderlochreihe 21 gilt vorzugsweise $n_{21} >= d_{41} / (d_{41} - d_{21})$, insbesondere $n_{21} = d_{41} / (d_{41} - d_{21})$, um sämtliche Zwischenpositionen des Noniussystems einnehmen zu können.

Damit das erste Langloch einen Zyklus des Nonius abdecken kann, hat das erste Langloch 32 vorzugsweise eine - insbesondere wie dargestellt zwischen den Rundungsmittelpunkten des ersten Langlochs 32 gemessene - Länge $l_{32}$, welche dem Produkt der Zahl der Löcher der ersten Verbinderlochreihe 21 abzüglich 1 mit dem Differenzbetrag zwischen dem Lochabstand $d_{41}$ der ersten Grundkörperlochreihe 41 und dem Lochabstand $d_{21}$ der ersten Verbinderlochreihe 21 entspricht, also (5 - 1) * (25 mm - 20 mm) = 20 mm. Das erste Langloch 32 weist demgemäss eine Länge $l_{32}$ von 20 mm auf. Für die Länge des ersten Langlochs $l_{32}$ gilt allgemein vorzugsweise $l_{32} >= \min(d_{21}, d_{41})$, vorzugsweise $l_{32} = \min(d_{21}, d_{41})$, damit das erste Langloch sämtliche Zwischenschritte des Noniussystems abdecken kann.

Der Abstand $d_{32}$ des ersten Langlochs 32 vom vorgelagerten vordersten Loch 31' der ersten Verbinderlochreihe 21 beträgt 25 mm.

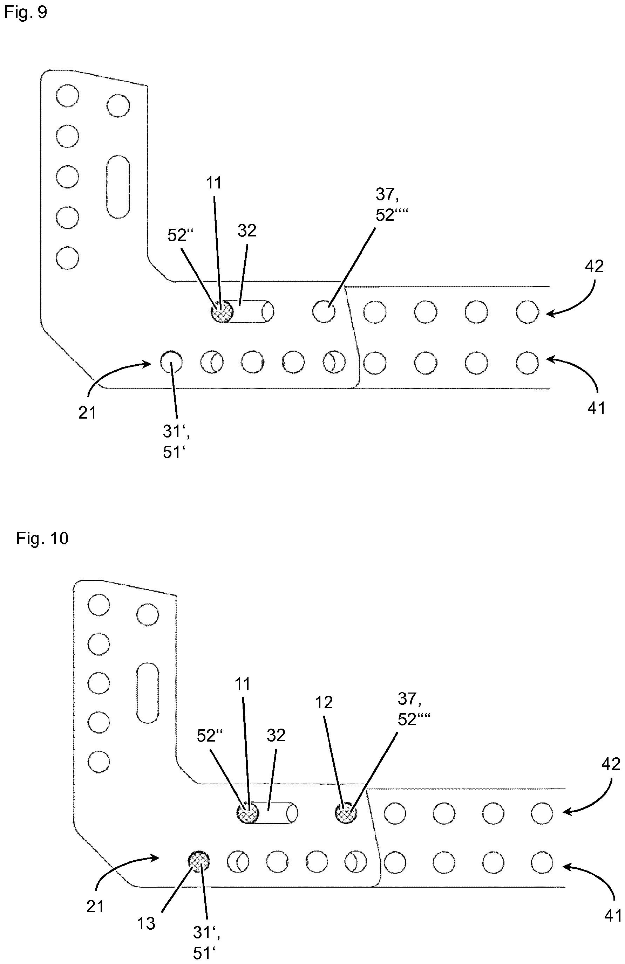

Der Verbinder 2 weist, insbesondere in seiner Basisplatte 25, noch ein Stützloch 37 auf. Dieses Stützloch 37 bildet eine Durchbrechung des Verbinders 2, insbesondere seiner Basisplatte 25, und mündet in die Anlagefläche 24 ein. Das Stützloch 37 ist als Rundloch ausgebildet und in der Längsverlängerung des ersten Langlochs 32 angeordnet. Insbesondere liegt das Stützloch 37 auf der Längsachse 82 des ersten Langlochs 32. Das Stützloch 37 ist insbesondere so angeordnet, dass, wenn das Stützloch 37 ein Gegenloch 52'''' der zweiten Grundkörperlochreihe 42 überlagert und das erste Langloch 32 die zweite Grundkörperlochreihe 42 parallel, also mit parallelen Längsachsen 82 und 92 überlagert, ein Loch 31' der ersten Verbinderlochreihe 21, vorzugsweise das dem Stützloch 37 am weitesten entfernte Loch 31', ein Loch 51' der erste Grundkörperlochreihe 41 überlagert, wie in Figur 9 gezeigt.

Die Figuren 3 bis 6 zeigen aufeinanderfolgende Schritte bei einem Verfahren zur Montage des Befestigungssets. Zunächst wird, wie in Figur 3 gezeigt, der Verbinder 2 am Grundkörper 4 so positioniert, dass die Anlagefläche 24 des Verbinders 2 dem Grundkörper 4 zugewandt ist und das erste Langloch 32 in Überlappung mit der zweiten Grundkörperlochreihe 42 gelangt. Der Anschlag 27 des Verbinders 2 kann helfen, diese Position zu finden.

Sodann wird, wie in Figur 4 gezeigt, ein zu den Gegenlöchern 52 der zweiten Grundkörperlochreihe 42 sowie zu der Querabmessung des ersten Langlochs 32 passgenauer erster Stift 11 durch das erste Langloch 32 und eines der Gegenlöcher 52 gesteckt, im Beispiel der Figur 4 das Gegenloch 52", und hiermit eine erste Stiftverbindung hergestellt. Hierdurch wird eine Vormontagekonfiguration erhalten, in welcher der Verbinder 2 zwar einerseits schon am Grundkörper 4 gesichert ist, andererseits aber noch eine Verschiebung des Verbinders 2 relativ zum Grundkörper 4 in der in Figur 4 gezeigten Pfeilrichtung möglich ist, und zwar in einer Anordnung, in welcher die erste Verbinderlochreihe 21 die erste Grundkörperlochreihe 41 parallel, also bei parallelen Längsachsen 81 und 91, überlagert. Der am Grundkörper 4 anliegende Anschlag 27 des Verbinders 2 kann dabei eine Drehsicherung bilden, der die beiden Lochreihen 21 und 41 in der parallel überlagernden Position hält.

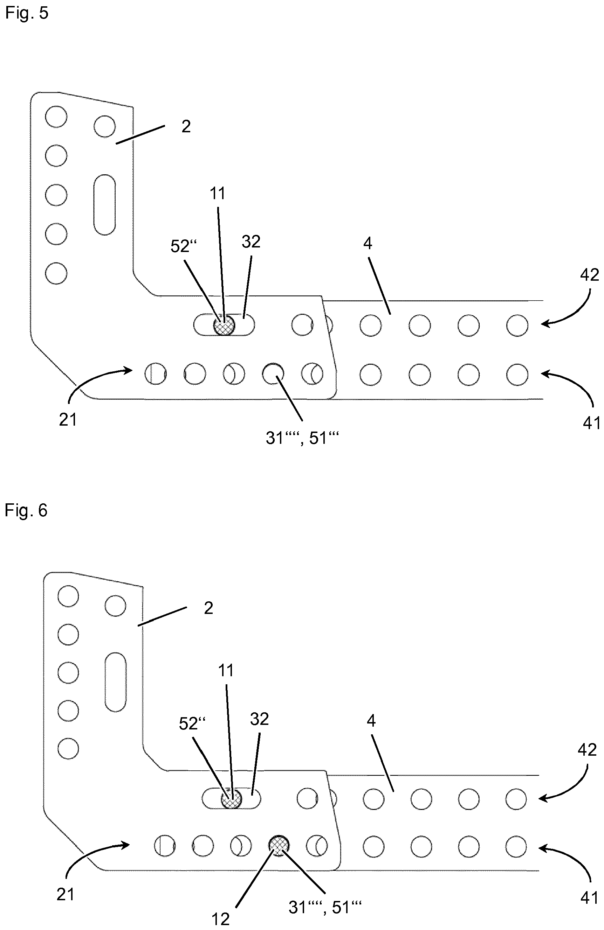

Bei der Verschiebung des Verbinders 2 relativ zum Grundkörper 4 in der in Figur 4 gezeigten Pfeilrichtung kommen entsprechend dem Noniusprinzip unterschiedliche Löcher 31 der erste Verbinderlochreihe 21 mit Löchern 51 der ersten Grundkörperlochreihe 41 in Überlagerung. Figur 5 zeigt ein Beispiel, bei dem der Verbinder 2 relativ zum Grundkörper 4 im Vergleich zu Figur 4 ein Stück weit nach links verschoben ist und nun die Löcher 31 '''' und 51 ''' in Überlagerung sind.

Ist die gewünschte Endmontageposition erreicht, zum Beispiel die Position der Figur 5, wird wie in Figur 6 gezeigt ein zweiter Stift 12 passgenau durch die sich überlagernden Löcher 31'''' und 51''' der ersten Verbinderlochreihe 21 beziehungsweise der ersten Grundkörperlochreihe 41 gesteckt und hiermit eine zweite Stiftverbindung hergestellt. Hierdurch wird der Verbinder 2 am Grundkörper 4 längsfixiert. Der erste Stift 11 kann sodann entfernt werden oder auch an Ort und Stelle verbleiben. Der am erste Grundkörper 4 anliegende Anschlag 27 sorgt dabei für eine Drehfixierung des Verbinders 2 am ersten Grundkörper 4.

Die Stifte 11 und/oder 12 können vorzugsweise Schrauben sein, die für die endgültige Fixierung verschraubt werden können.

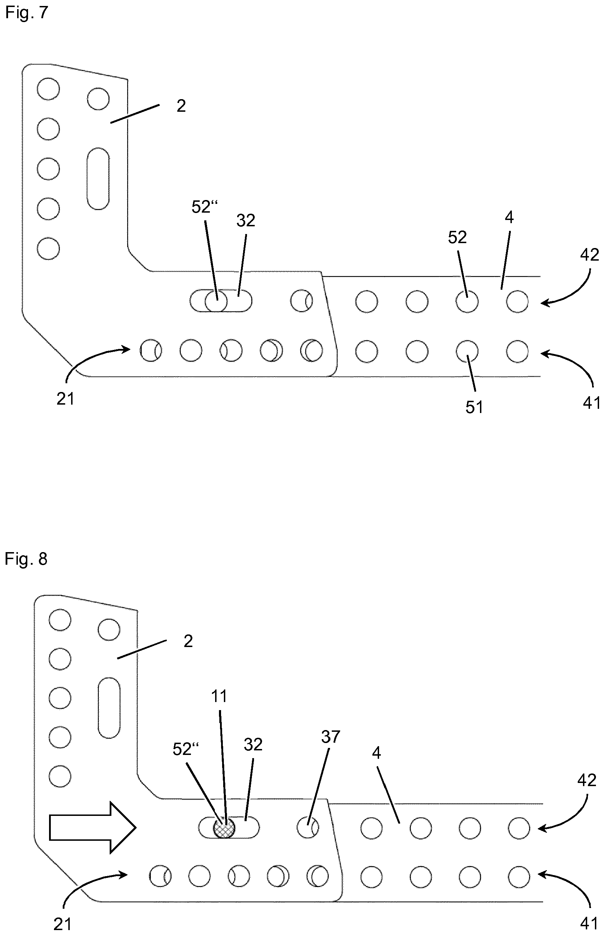

Die Figuren 7 bis 10 zeigen aufeinanderfolgende Schritte bei einem alternativen Verfahren zur Montage des Befestigungssets.

Zunächst wird abermals, wie in Figur 7 gezeigt, der Verbinder 2 am Grundkörper 4 so positioniert, dass die Anlagefläche 24 des Verbinders 2 dem Grundkörper 4 zugewandt ist und das erste Langloch 32 in Überlappung mit der zweiten Grundkörperlochreihe 42 gelangt. Der Anschlag 27 des Verbinders 2 kann helfen, diese Position zu finden.

Sodann wird, wie in Figur 8 gezeigt, ein zu den Gegenlöchern 52 der zweiten Grundkörperlochreihe 42 sowie zu der Querabmessung des ersten Langlochs 32 passgenauer erster Stift 11 durch das erste Langloch 32 und eines der Gegenlöcher 52 gesteckt, im Beispiel der Figur 4 durch das erste Langloch 32 und das Gegenloch 52", und hiermit eine Montage-Stiftverbindung hergestellt. Hierdurch wird eine Konfiguration erhalten, in welcher der Verbinder 2 zwar einerseits schon am Grundkörper 4 gesichert ist, andererseits aber noch eine Verschiebung des Verbinders 2 relativ zum Grundkörper 4, insbesondere in der in Figur 8 gezeigten Pfeilrichtung, möglich ist, und zwar in einer Anordnung, in welcher die erste Verbinderlochreihe 21 die erste Grundkörperlochreihe 41 parallel, also mit parallelen Längsachsen 81 und 91, überlagert. Der am Grundkörper 4 anliegende Anschlag 27 des Verbinders 2 kann dabei eine Drehsicherung bilden, der die beiden Lochreihen 21 und 41 in der parallel überlagernden Position hält.

Anschliessend wird der Verbinder 2 relativ zum Grundkörper 4 in der in Figur 8 gezeigten Richtung verschoben, und zwar so weit, bis der Stift 11 am linken Ende des ersten Langlochs 32 anschlägt. Der resultierende Zustand ist in Figur 9 gezeigt. Wie Figur 9 zeigt, überlagert in diesem Zustand das Stützloch 37 das Gegenloch 52"" der zweiten Grundkörperlochreihe 42 und das dem Stützloch 37 am weitesten entfernte Loch 31' überlagert das Loch 51' der ersten Grundkörperlochreihe 41.

Sodann werden, wie in Figur 10 gezeigt, ein zweiter Stift 12 passgenau durch das Stützloch 37 und das Gegenloch 52"" der zweiten Grundkörperlochreihe 42 gesteckt und damit eine erste Stütz-Stiftverbindung hergestellt, und ein dritter Stift 13 passgenau durch die sich überlagernden Löcher 31' und 51' der ersten Verbinderlochreihe 21 beziehungsweise der ersten Grundkörperlochreihe 41 gesteckt und damit eine zweite Stütz-Stiftverbindung hergestellt. Hierdurch wird der Verbinder 2 am Grundkörper 4 längsfixiert und eine insbesondere zur Aufnahme von relativ hohen Drehmomenten geeignete Konfiguration erhalten. Der erste Stift 11 kann sodann entfernt werden oder auch an Ort und Stelle verbleiben.

Die Stifte 11, 12 und/oder 13 können vorzugsweise Schrauben sein, die für die endgültige Fixierung verschraubt werden können.

**Patentansprüche**

1. Befestigungsset mit einem ersten Grundkörper (4) und einem Verbinder (2) zum Befestigen am ersten Grundkörper (4),
   wobei der erste Grundkörper (4) eine erste Grundkörperlochreihe (41) aufweist, und
   wobei der Verbinder (2) eine erste Verbinderlochreihe (21) aufweist, die mit der ersten Grundkörperlochreihe (41) ein Noniussystem bildet,
   **dadurch gekennzeichnet,**

**dass** der Verbinder (2) ein erstes Langloch (32) aufweist, das parallel zur ersten Verbinderlochreihe (21) verläuft, und
**dass** der erste Grundkörper (4) zumindest ein Gegenloch (52") für eine Überlagerung mit dem ersten Langloch (32) bei gleichzeitiger paralleler Überlagerung der ersten Verbinderlochreihe (21) mit der ersten Grundkörperlochreihe (41) aufweist.

2. Befestigungsset nach Anspruch 1,
**dadurch gekennzeichnet,**
**dass** der Lochabstand ($d_{21}$) der ersten Verbinderlochreihe (21) kleiner ist als der Lochabstand ($d_{41}$) der ersten Grundkörperlochreihe (41).

3. Befestigungsset nach einem der vorstehenden Ansprüche,
**dadurch gekennzeichnet,**
**dass** das erste Langloch (32) parallel und versetzt zur ersten Verbinderlochreihe (21) verläuft.

4. Befestigungsset nach einem der vorstehenden Ansprüche,
**dadurch gekennzeichnet,**
**dass** der erste Grundkörper (4) mehrere Gegenlöcher (52) für eine Überlagerung mit dem ersten Langloch (32) bei gleichzeitiger paralleler Überlagerung der ersten Verbinderlochreihe (21) mit der ersten Grundkörperlochreihe (41) aufweist, wobei die Gegenlöcher (52) eine zweite Grundkörperlochreihe (42) bilden.

5. Befestigungsset nach Anspruch 4,
**dadurch gekennzeichnet,**
**dass** der Verbinder (2) ein Stützloch (37) aufweist, das ein Gegenloch (52"") der zweiten Grundkörperlochreihe (42) überlagern kann, wenn ein Loch (31') der ersten Verbinderlochreihe (21) ein Loch (51') der ersten Grundkörperlochreihe (41) überlagert und wenn das erste Langloch (32) ein weiteres Gegenloch (52") der zweiten Grundkörperlochreihe (42) überlagert.

6. Befestigungsset nach einem der vorstehenden Ansprüche,
**dadurch gekennzeichnet,**
**dass** das erste Langloch (32) zumindest bereichsweise auf gleicher Höhe wie die erste Verbinderlochreihe (21) liegt.

7. Befestigungsset nach einem der vorstehenden Ansprüche,
**dadurch gekennzeichnet,**
**dass** die Länge ($l_{32}$) des ersten Langlochs (32) mindestens so gross ist wie der Lochabstand ($d_{21}$) der ersten Verbinderlochreihe (21).

8. Befestigungsset nach einem der vorstehenden Ansprüche,
**dadurch gekennzeichnet,**
**dass** das erste Langloch (32) und die Löcher (31) der ersten Verbinderlochreihe (21) den Verbinder (2) in derselben Richtung durchbrechen, und
**dass** das zumindest eine Gegenloch (52") und die Löcher (51) der ersten Grundkörperlochreihe (41) den Grundkörper (4) in derselben Richtung durchbrechen.

9. Befestigungsset nach einem der vorstehenden Ansprüche,
**dadurch gekennzeichnet,**
**dass** der Verbinder (2) einen Anschlag (27) für den ersten Grundkörper (4) aufweist, der ein Drehsicherung bildet, wenn das zumindest eine Gegenloch (52") das erste Langloch (32) überlagert und die erste Verbinderlochreihe (21) die erste Grundkörperlochreihe (41) parallel überlagert.

10. Befestigungsset nach Anspruch 9,
**dadurch gekennzeichnet,**
**dass** die erste Verbinderlochreihe (21) und das erste Langloch (32) in einer Basisplatte (25) ausgebildet sind, und
dass der Anschlag (27) durch eine Abwinklung der Basisplatte (25) gebildet ist.

11. Befestigungsset nach einem der Ansprüche 9 oder 10,
**dadurch gekennzeichnet,**
**dass** der Anschlag (27) zumindest bereichsweise auf gleicher Höhe wie das erste Langloch (32) liegt.

**12.** Befestigungsset nach einem der Ansprüche 9 bis 11,
**dadurch gekennzeichnet,**
**dass** das erste Langloch (32) zwischen dem Anschlag (27) und der ersten Verbinderlochreihe (21) liegt.

**13.** Befestigungsset nach einem der vorstehenden Ansprüche,
**dadurch gekennzeichnet,**
**dass** der erste Grundkörper (4) eine Montageschiene ist.

**14.** Verfahren zur Montage eines Befestigungssets nach einem der vorstehenden Ansprüche, bei dem

- mittels eines ersten Stifts (11) eine erste Stiftverbindung zwischen dem zumindest einen Gegenloch (52") und dem ersten Langloch (32) hergestellt wird, und
- zeitlich nach dem Herstellen der ersten Stiftverbindung mittels eines zweiten Stifts (12) eine zweite Stiftverbindung zwischen der ersten Verbinderlochreihe (21) und der ersten Grundkörperlochreihe (41) hergestellt wird.

**15.** Verfahren nach Anspruch 14,
**dadurch gekennzeichnet,**
**dass** der Verbinder (2) zeitlich nach dem Herstellen der ersten Stiftverbindung und zeitlich vor dem Herstellen der zweiten Stiftverbindung relativ zum Grundkörper (4) versetzt wird.

**16.** Verbinder eines Befestigungssets nach einem der Ansprüche 1 bis 13.

Fig. 1

Fig. 2

Fig. 3

Fig. 4

Fig. 5

Fig. 6

Fig. 7

52"  32

2

52  4

42

21

51  41

Fig. 8

11

52"  32  37  4

2

42

21  41

Fig. 9

Fig. 10

Europäisches Patentamt
European Patent Office
Office européen des brevets

# EUROPÄISCHER RECHERCHENBERICHT

**Nummer der Anmeldung**

EP 17 20 2076

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2012 161224 A (CHUGOKU ELECTRIC POWER) 23. August 2012 (2012-08-23)<br><br>* Zusammenfassung; Abbildungen 1-7 *<br>----- | 1,2, 4-11, 13-16 | INV.<br>E04B1/41<br><br>ADD.<br>F16B7/10 |
| X,D | US 3 003 600 A (MACKENZIE JAMES A) 10. Oktober 1961 (1961-10-10)<br>* Spalte 2, Zeile 39 - Spalte 4, Zeile 23; Abbildungen 1, 5-13 *<br>----- | 1,3-16 | F16B19/02<br>G01B3/20<br>E04B1/38 |
| A,D | US 2005/286968 A1 (LOEBNER HUGH G [US]) 29. Dezember 2005 (2005-12-29)<br>* Zusammenfassung; Abbildungen 1-8 *<br>----- | 1,2,9, 10,13 | |

**RECHERCHIERTE SACHGEBIETE (IPC)**

F16B
G01B
E04B

Der vorliegende Recherchenbericht wurde für alle Patentansprüche erstellt

| Recherchenort | Abschlußdatum der Recherche | Prüfer |
|---|---|---|
| Den Haag | 31. Januar 2018 | Couprie, Brice |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 20 2076

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-01-2018

| Im Recherchenbericht angeführtes Patentdokument | Datum der Veröffentlichung | Mitglied(er) der Patentfamilie | Datum der Veröffentlichung |
|---|---|---|---|
| JP 2012161224 A | 23-08-2012 | KEINE | |
| US 3003600 A | 10-10-1961 | GB 856780 A<br>US 3003600 A | 21-12-1960<br>10-10-1961 |
| US 2005286968 A1 | 29-12-2005 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3049346 A1
- US 3495796 A
- US 20050286968 A1
- US 3003600 A
- US 2012217352 A1
- US 8651786 B2
- US 8387324 B2